# EUROPEAN PATENT APPLICATION

(11) **EP 1 895 224 A1**
(43) Date of publication of application: **05.03.2008**
(21) Application number: 06254468.9
(22) Date of filing: 29.08.2006
(51) Int. Cl.: F16L 57/04

(54) **Pipe section comprising a tubular insulating element of a fire retarding material**

(71) Applicant: Rockwool International A/S, 2640 Hedehusene (DK)
(72) Inventor: The designation of the inventor has not yet been filed
(74) Representative: Samuels, Lucy Alice

(57) **Abstract**

A pipe section (1) comprising a tubular insulating element (2) having an outer surface (3) and an inner surface (4) and an insulating material comprising mineral wool, such as glass wool, stone wool or slag wool, arranged between the outer surface (3) and the inner (4) surface. A fire retarding material (7) is arranged in the mineral wool in such manner that the concentration of the fire retarding material (7) in the mineral wool is higher in an annular core section (8) between the outer surface (3) and the inner surface (4) than in sections being closer to the outer surface (3) and the inner surface (4). Methods for producing such a pipe section are also described.

## Description

The invention relates to a pipe section in accordance with the introduction of claim 1. The invention also relates to a method for producing such a pipe section.

Pipe sections comprising mineral wool as the insulating layer has proven to have good insulating properties as well as good resistance against fire. The last property is important when pipe sections are used for fire protecting pipes conveying a flammable liquid, sprinkler pipes, circular ventilation ducts, or to protect circular constructional steel members, hangers for ventilation ducts or sprinkler pipes, or when pipes penetrate vertical or horizontal fire rated partition walls.

Generally, the resistance against fire is increased when the thickness of the insulating layer is increased. Thus, when a structure such as a circular constructional steel member or a pipe conveying a flammable liquid is to be fire protected, the thickness of the insulating layer must be adjusted in such manner that it prevents the structure from being exposed to a critical temperature for a desired time, which is often 30, 60, 90 or 120 minutes. Traditionally this is accomplished by simply using thicker pipe sections for higher fire rated structures. However, often it is desired to use as thin insulating layer as possible in order to minimise the bulkiness of the structure. There is therefore a desire to reduce the diameter of the pipe section, but maintaining the good fire protecting properties.

WO 97/20780 describes a man-made vitreous fibre product through which is substantially uniformly distributed a particulate endothermic material. The chosen endothermic material works as a fire retarding material since it is stable at up to 200 °C, but decomposes endothermically at temperatures above 200 °C. If the product is shaped as slabs or plates it is suitable for use in e.g. fire doors or for fire protection of steel structures. It is also mentioned that the product can be shaped as a pipe or be used as granulate.

In WO 97/20780 the fire retarding material is substantially uniformly distributed in the product which certainly adds to the resistance against fire. However, when the product is a pipe section the uniform distribution of the fire retarding material has a number of disadvantages. In case of external fire the outermost fire retarding material will quickly be exposed to temperatures well above 200 °C, and the fire retarding properties will quickly disappear. The innermost fire retarding material, i.e. closest to the insulated pipe or structure, will not be exposed to temperatures above 200 °C until very late, probably not until other structures have already failed. Similarly, in case of internal fire, e.g. fire within a ventilation duct, innermost fire retarding material will quickly be exposed to temperatures well above 200 °C, and the fire retarding properties will quickly disappear, while the outermost fire retarding material will not be exposed to temperatures above 200 °C until very late. Therefore, in relation to fire protection the fire retarding material in the sections closest to the outer and inner surfaces of the pipe section can be considered superfluous and adds unnecessary to the weight and costs of the pipe section. Another disadvantage of having the fire retarding material distributed uniformly in the pipe section is that during handling of the pipe section fire retarding material will fall off from the inner and outer surfaces and from the axial opening slit which is most often present in pipe sections, unless all surfaces are covered by e.g. a glass fleece.

Based on these observations it is an object of the invention to provide a pipe section that has improved fire protection properties compared to conventional pipe sections, but does not have the disadvantages of the pipe section mentioned above.

This object is achieved by providing a pipe section as stated in the characterizing part of claim 1.

Thereby is obtained a pipe section that has good fire protection properties without superfluous amounts of fire retarding material. Compared to conventional pipe sections without any fire retarding material the outer diameter of the pipe section can be reduced and still provide the same fire protection properties. Compared to pipe sections provided with a uniformly distributed fire retarding material the pipe section according to the invention has a reduced weight and no dusting or falling off of fire retarding material from the inner and/or outer surfaces.

In a first embodiment the fire retarding material is present in the annular core section only. Thereby is ensured that no fire retarding material is exposed to the outer and inner surfaces whereby the risk of fire retarding material falling off from these surfaces is eliminated.

The annular core section may have a radial thickness of between 1% and 90%, preferably between 5% and 50%, of the radial thickness of the insulating element. The more concentrated the fire retarding material is in the annular core section the better fire protecting properties of the pipe section. However, it is also desirable that the pipe section maintains its integrity, and therefore the annular core section must have a certain radial width.

The fire retarding material is preferably a particulate material that decomposes endothermically at increased temperatures, such as particulate material that liberates water at temperatures above 180 °C. It may be a carbonate or hydrate, and preferably it is magnesium hydroxide. The particulate material should have a mean particle size of between 0.5 mm and 10 mm, preferably between 2 mm and 5 mm.

Such particulate material is able to maintain its water liberating properties even after having been through a curing oven as it is conventional in the manufacturing of mineral wool pipe sections.

It is also an object of the invention to provide a new method for producing a pipe section with the features described above. Generally, pipe sections comprising an insulating layer of mineral wool are made by first preparing a web of mineral wool which is then treated in different manner depending on the pipe section to be produced.

Thus, it is known to produce pipe sections by producing batts of mineral wool with a cured binder and cutting the pipe sections from the batts. Another known method is to wind an uncured web of mineral wool around a mandrel and then cure the binder in the mineral wool and remove the pipe section from the mandrel. A third method is to form pleatings or wavings of a web of mineral wool with an uncured binder, curing the binder, cutting the pleatings into smaller pieces consisting of half pleatings, removing material from each smaller piece by milling to form it into a half-annular shape and finally joining two such half-annular pieces to form the pipe section.

In order to produce the new pipe section according to the invention new methods have been developed, which methods include the following known features: preparing a web of mineral wool, adding a fire retarding material to the mineral wool during or after preparation of the web of mineral wool, and manufacturing the pipe section from the mineral wool. These features are known from WO 97/20780 mentioned above.

In order to achieve a pipe section according to the invention the method also comprises that the fire retarding material is added to the web of mineral wool in such manner that after manufacturing of the pipe section from the mineral wool the concentration of the fire retarding material in the mineral wool is higher in an annular core section between the outer surface and the inner surface than in sections being closer to the outer surface and inner surface.

In a first embodiment for producing a pipe section according to the invention the fire retarding material is added to a surface of the web of mineral wool, and subsequently the web of mineral wool is wound around a mandrel. By this method a so-called wound pipe section is made. Such a pipe section is relatively rigid and provides excellent heat insulating properties.

The fire retarding material is preferably added to a surface of the web immediately before winding whereby the risk of loosing fire retarding material during handling is minimised.

In order to achieve a pipe section with good integrity the fire retarding material is added to the surface of the web in a length that corresponds to 1-10 windings, preferably 2-5 windings.

In a second first embodiment for producing a pipe section according to the invention the fire retarding material is added to a core section of the web of mineral wool, and subsequently the following steps are performed:
• pleating the web into a plurality of pleatings,
• dividing the pleated web at a centre plan to form smaller pieces each comprising half a pleating,
• mechanically working each of the smaller pieces to a semi-annular shaped body,
• joining two semi-annular shaped bodies to form a pipe section.

In either of the two embodiments for producing a pipe section the fire retarding material is preferably a particulate material that decomposes endothermically at increased temperatures, such as particulate material that liberates water at temperatures above 180 °C. It may be a carbonate or hydrate, and preferably it is magnesium hydroxide. The particulate material should have a mean particle size of between 0.5 mm and 10 mm, preferably between 2 mm and 5 mm.

The invention will be described in the following with reference to the drawings in which
Figure 1 shows a pipe section provided with a particulate fire retarding material provided substantially only in an annular core section of the insulating layer;
Figure 2 shows schematically a first method for producing a pipe section as shown in Figure 1; and
Figures 3a and 3b show schematically a second method for producing a pipe section as shown in Figure 1.

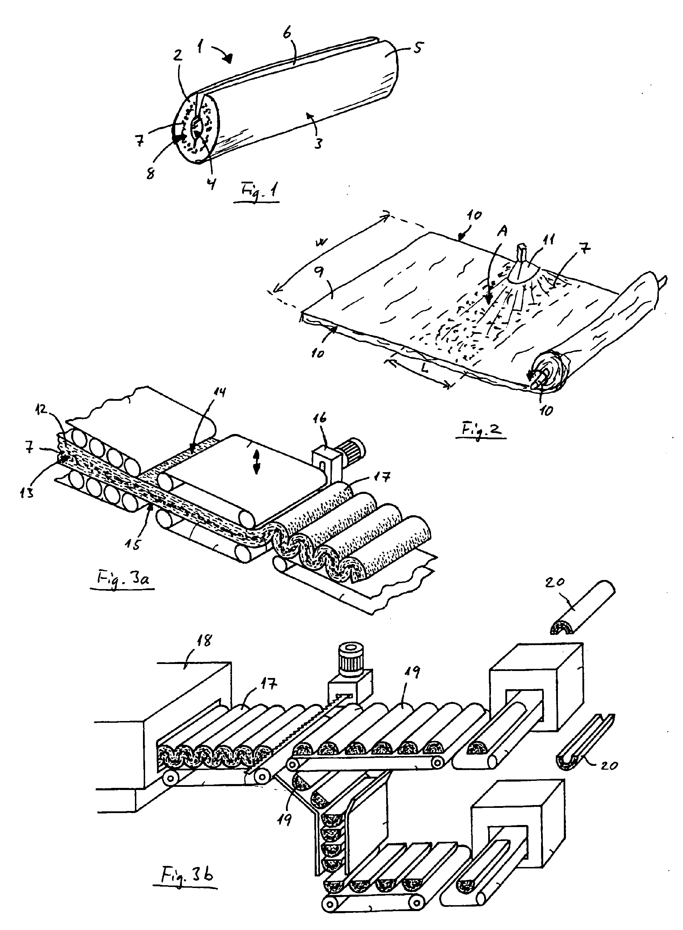

Figure 1 shows a pipe section 1 according to the invention. The pipe section comprises an insulating material that forms a tubular insulating element 2 with an outer surface 3 and an inner surface 4. The insulating material comprises mineral wool, such as glass wool, stone wool or slag wool, where stone wool is preferred due to its excellent fire properties.

The outer surface 3 of the insulating material is preferably provided with a protective covering 5, such as an aluminium foil or the like, that preferably is glued to the insulating material as it is conventional in the field of pipe sections.

The inner surface 4 is preferably not covered. This is also conventional.

The pipe section 1 is provided with an axial opening slit 6 that allows the pipe section 1 to be opened and mounted on a pipe (not shown). The axial opening slit 6 preferably has a radial extent of up to 4/5 of the outer diameter D of the pipe section 1. Thus, the axial opening slit 6 extends radially all the way through one layer of the tubular insulating element 2 and well into to the diametrically opposite layer. This design allows the pipe section 1 to be opened with only a minor risk of breaking the pipe section 1.

As it clearly appears from Figure 1 the pipe section 1 is provided with a fire retarding material 7 that is arranged in an annular core section 8 while the sections being closer to the outer surface 3 and inner surface 4 are free or substantially free of fire retarding material 7.

The fire retarding material 7 is preferably a particulate material that decomposes endothermically at increased temperatures. One example of such material is magnesium hydroxide that liberates water at temperatures above 200 °C. The magnesium hydroxide may have mean particle size of between 0.5 mm and 10 mm, preferably between 2 mm and 5 mm. Another example is aluminium hydroxide that liberates water at temperatures above 180 °C. Other materials may also be used.

Figure 2 shows a first embodiment for producing a pipe section 1 according to the invention. In this method the pipe section 1 is wound from a thin web 9 of mineral wool, preferably stone wool. The web 9 is wound around a mandrel 10 as it is known when producing wound pipe sections. Before or during the winding of the web 9 fire retarding material 7 is distributed on the upper surface of the web 9 at a predetermined area A. Preferably the area A spans the whole width W of the web 9 such that fire retarding material 7 is present continuously from one end of the pipe section 1 to the other. However, if desired the fire retarding material 7 may also be applied only in a narrower area such that it does not extend to the edges 10 of the web 9. In such case the fire retarding material 7 is not exposed at the end of the pipe section 1 and the risk of falling off material is eliminated.

Preferably the length L of the area A corresponds to at least one full revolution of the winding such that it is ensured that the fire retarding material 7 is present annularly in the pipe section 1. It is possible that the fire retarding material 7 is applied at an area A with a length L that is a little shorter than one winding of the pipe section 1. An advantage of this is that it would then be possible to provide the axial opening slit 6 in an area without fire retarding material 7. Thereby the risk of fire retarding material 7 falling off at the axial opening slit 6 is eliminated. This embodiment would require accurate position control during manufacturing of the pipe section 1 which may add to the costs.

In a preferred embodiment the length L of the area A corresponds to a plurality of windings, such as up to 10 windings. This of course increases the thickness of the annular core section 8 provided with the fire retarding material 7, but it ensures better integrity of the insulating material than if the same amount of fire retarding material 7 is concentrated in only one winding. The preferred length of the area A should depend on the amount of fire retarding material 7 that is to be added to the pipe section 1. Thus, it should be ensured that the pipe section 1 still has good integrity and does not delaminate after winding. Normally, 2-5 windings provided with the fire retarding material 7 would suffice.

The fire retarding material 7 is applied by an applicator 11 positioned above the web 9 to be wound. The applicator 11 may be of any construction that provides the desired distribution of fire retarding material 7. The actual construction of the applicator 11 depends on the physical properties of the fire retarding material 7, i.e. whether it is applied in dry or wet form, the particle sizes, etc. The applicator 11 will not be described further herein.

Figures 3a and 3b show a second embodiment for producing a pipe section 1 according to the invention. In this method the pipe section 1 is produced from a thick web 12 that undergoes different process steps. The web 12 is produced in such manner that the concentration of a fire retarding material 7 is higher in a core section 13 than in sections closer to the upper surface 14 and lower surface 15. This may be accomplished by any of the methods described in WO 99/51536 or in PCT/EP2006/08068.

The web 12 with the fire retarding material 7 concentrated in the core section 13 is then pleated as shown in Figure 3a by means of an up and down moving mechanism 16 to form pleatings 17. The pleated web 12 is now led to a curing oven 18 that cures the binder provided in the web 12, such that stable pleatings 17 as shown in Figures 3b are formed. The pleated web 12 is then divided at a centre plan to form separate smaller pieces 19 that each comprises half a pleating 17. These smaller pieces 19 are then worked mechanically, e.g. by milling, to semi-annular shaped bodies 20. Two such semi-annular shaped bodies 20 are then joined to form a pipe section 1. This process without a fire retarding material 7 is described in WO 97/01006.

Since the initial web 12 is provided with a fire retarding material 7 in the core section 13 the fire retarding material 7 will be present in the core section of each of the semi-annular shaped bodies 20 and thus in an annular core section 8 of the pipe section 1, when two such semi-annular bodies 20 are interconnected.

## Claims

1. A pipe section (1) comprising a tubular insulating element (2) having an outer surface (3) and an inner surface (4) and an insulating material comprising mineral wool, such as glass wool, stone wool or slag wool, arranged between the outer surface (3) and the inner (4) surface, a fire retarding material (7) being present in the mineral wool, **characterized in that** the concentration of the fire retarding material (7) in the mineral wool is higher in an annular core section (8) between the outer surface (3) and the inner surface (4) than in sections being closer to the outer surface (3) and the inner surface (4).

2. A pipe section according to claim 1, **characterized in that** the fire retarding material (7) is present in the annular core section (8) only.

3. A pipe section according to claim 2, **characterized in that** the annular core section (8) has a radial thickness of between 1% and 90%, preferably between 5% and 50%, of the radial thickness of the insulating element (2).

4. A pipe section according to any one of claims 1-3, **characterized in that** the fire retarding material (7) is a particulate material that decomposes endothermically at increased temperatures.

5. A pipe section according to claim 4, **characterized in that** the particulate material liberates water at temperatures above 180 °C.

6. A pipe section according to claim 4 or 5, **characterized in that** the particulate material is a carbonate or hydrate.

7. A pipe section according to claim 6, **characterized in that** the particulate material is magnesium hydroxide.

8. A pipe section according to any one of claims 4-7, **characterized in that** the particulate material has a mean particle size of between 0.5 mm and 10 mm, preferably between 2 mm and 5 mm.

9. A method for producing a pipe section (1) comprising a tubular insulating element (2) having an outer surface (3) and an inner surface (4) and an insulating material comprising mineral wool, such as glass wool, stone wool or slag wool, arranged between the outer surface (3) and the inner surface (4), said method comprising the following steps:
• preparing a web (9; 12) of mineral wool,
• adding a fire retarding material (7) to the mineral wool during or after preparation of the web (9; 12) of mineral wool,
• manufacturing the pipe section (1) from the mineral wool,
**characterized in that** the fire retarding material (7) is added to the web (9; 12) of mineral wool in such manner that after manufacturing of the pipe section (1) from the mineral wool the concentration of the fire retarding material (7) in the mineral wool is higher in an annular core section (8) between the outer surface (3) and the inner surface (4) than in sections being closer to the outer surface (3) and the inner surface (4).

10. A method according to claim 9, **characterized in that** the fire retarding material (7) is added to a surface of the web (9) of mineral wool, and subsequently the web (9) of mineral wool is wound around a mandrel (10).

11. A method according to claim 10, **characterized in that** the fire retarding material (7) is added to a surface of the web (9) immediately before winding.

12. A method according to claims 10 or 11, **characterized in that** the fire retarding material (7) is added to the surface of the web (9) in a length (L) that corresponds to 1-10 windings, preferably 2-5 windings.

13. A method according to claim 9, **characterized in that** the fire retarding material (7) is added to a core section (13) of the web (12) of mineral wool, and subsequently the following steps are performed:
• pleating the web (12) into a plurality of pleatings (17),
• dividing the pleated web at a centre plan to form smaller pieces (19) each comprising half a pleating (17),
• mechanically working each of the smaller pieces (19) to a semi-annular shaped body (20),
• joining two semi-annular shaped bodies (20) to form a pipe section (1).

14. A method according to any one of claims 9-13, **characterized in that** the fire retarding material (7) is a particulate material that decomposes endothermically at increased temperatures.

15. A method according to claim 14, **characterized in that** the particulate material liberates water at temperatures above 180 °C.

16. A method according to claim 14 or 15, **characterized in that** the particulate material is a carbonate or hydrate.

17. A method according to claim 16, **characterized in that** the particulate material is magnesium hydroxide.

18. A method according to any one of claims 14-17, **characterized in that** the particulate material has a mean particle size of between 0.5 mm and 10 mm, preferably between 2 mm and 5 mm.
